# EUROPEAN PATENT APPLICATION

(11) **EP 4 447 195 A1**
(43) Date of publication of application: **16.10.2024**
(21) Application number: 22904344.3
(22) Date of filing: 09.12.2022
(51) Int. Cl.: H01M 10/54, C22B 1/00, C22B 7/00

(54) **STORAGE BATTERY RECYCLING METHOD**

(30) Priority: 10.12.2021 JP 2021201050
(71) Applicant: Jera Co., Inc., Tokyo 103-6125 (JP)
(72) Inventor: OZAKI Ryoichi, Tokyo 103-6125 (JP); MORIYAMA Tomohiro, Tokyo 103-6125 (JP); SAKURAI Yuta, Tokyo 103-6125 (JP); TADA Koshi, Tokyo 103-6125 (JP); YOSHIDA Takuji, Tokyo 103-6125 (JP); TERAKADO Shingo, Tokyo 110-0008 (JP); UCHIDA Kazuhito, Tokyo 110-0008 (JP); HEMMI Masaru, Tokyo 110-0008 (JP)
(74) Representative: Krauns, Christian
(86) International application number: PCT/JP2022/045559
(87) International publication number: WO 2023/106417

(57) **Abstract**

The present invention relates to a storage battery recycling method including: a step of disassembling into each constituent component based on a disassembly method in accordance with a type of storage battery; a step of cutting an electrode component among the constituent components to generate cut pieces; a step of arranging the cut pieces on a mounting member provided in a container containing water; a step of separating the cut pieces into a plurality of elements made of different materials by performing electric pulse discharge in water in the container; and a step of sorting and recovering by type the plurality of elements made of different materials and separated from the cut pieces.

## Description

### [Technical Field]

The present invention relates to a storage battery recycling method for retrieving materials from used storage batteries.

Priority is claimed on Japanese Patent Application No. 2021-201050, filed December 10, 2021, the content of which is incorporated herein by reference.

### [Background Art]

In recent years, the demand for storage batteries as power sources for electronic devices and automobiles has increased. Because of this, the amount of recovered used storage batteries has also increased. The electrification of automobiles is expected to increase in the future, and because of this, it is predicted that a large amount of used storage batteries for electric vehicles will be generated. Storage batteries contain metals and other materials that can be reused as resources, and there is a demand for technology to efficiently recycle storage batteries. Conventionally, a storage battery recycling method involves exclusively incinerating the battery after disassembly, smelting the residue, and recovering the extracted valuable metals. For example, Patent Document 1 describes a method of recovering valuable metals by roasting a storage battery and treating the generated roasted product.

### [Citation List]

### [Patent Document]

[Patent Document 1] Japanese Unexamined Patent Application, First Publication No. 2021-091940

### [Summary of Invention]

### [Technical Problem]

According to the technology described in Patent Document 1, when a storage battery is roasted, not only resources such as an electrolytic solution and plastic are burned and resources cannot be recovered sufficiently, but also there is a problem that a large amount of CO₂ is generated due to the combustion of fuels.

The present invention has an object of providing a storage battery recycling method that realizes efficient disassembly of a storage battery with a small environmental load and improves the resource recovery rate.

### [Solution to Problem]

One aspect of the present invention is a storage battery recycling method including: a step of disassembling into each constituent component based on a disassembly method in accordance with a type of storage battery; a step of recovering an electrolytic solution in the aforementioned step of disassembling a storage battery; a step of cutting an electrode component among the aforementioned constituent components to generate cut pieces; a step of arranging the aforementioned cut pieces on a mounting member provided in a container containing water; a step of separating different types of materials from the aforementioned cut pieces by performing electric pulse discharge in water in the aforementioned container; a step of sorting and recovering by type a plurality of materials separated from the aforementioned cut pieces; and a step of recovering the aforementioned water contained in the aforementioned container in which the aforementioned electric pulse discharge is performed, and extracting components of an electrolytic solution dissolved in the aforementioned water based on electrodialysis.

According to the present invention, by treating the cut pieces of electrode components with electric pulse discharge, the types of materials recovered are increased, as compared to conventional roasting methods, and the amount of carbon dioxide emissions can be reduced.

Further, the present invention may include a step of cleaning the aforementioned cut pieces with a solvent, and a step of extracting components of the aforementioned electrolytic solution contained in the aforementioned solvent after cleaning.

According to the present invention, by cleaning the cut pieces with a solvent, the electrolytic solution adhering to the cut pieces can be removed, and the components of the electrolytic solution can be recovered from the recovered solvent.

In addition, in the aforementioned electric pulse discharge of the present invention, an electric pulse generated based on a pulse voltage of 1 to 90 kV may be discharged into the aforementioned water the number of times in accordance with a solid-liquid ratio between the aforementioned cut pieces and the aforementioned water in the aforementioned container.

According to the present invention, the material recovery efficiency can be improved by setting in advance a predetermined number of times the material is recovered and the material is not crushed excessively.

Further, when the aforementioned electrode component of the aforementioned storage battery is wound, the present invention may also include a step of cutting the aforementioned electrode component in a wound state, and a step of unfolding the aforementioned electrode component to individually recover a positive electrode component, a negative electrode component, and a separator.

According to the present invention, by classifying and differentiating (fractionating) the positive electrode component, the negative electrode component, and the separator from the wound electrode component; and by fractionating the negative electrode component, whose materials can be separated more easily than those of the positive electrode component, based on a different treatment method from that of the positive electrode component, it is possible to prevent materials, such as carbon contained in the negative electrode component, that hinder the reuse of the positive electrode active material from being mixed into the positive electrode active material.

In addition, when the aforementioned electrode components of the aforementioned storage battery of the present invention are stacked, a step of cutting the aforementioned electrode components in a stacked state may be included.

According to the present invention, a disassembly step can be performed efficiently.

Further, using a press mold having one or more punching dies with dimensions corresponding to sizes of one or more battery cells arranged in the aforementioned storage battery, the present invention may also include a step of simultaneously press-cutting positions of one or more of the aforementioned battery cells and retrieving one or more of the aforementioned electrode components having the aforementioned dimensions.

According to the present invention, a step of disassembling a secondary battery can be performed efficiently.

In addition, the present invention may also include, in the step of press-cutting the aforementioned storage battery using the aforementioned press mold, a step of recovering the aforementioned electrolytic solution squeezed out from the aforementioned storage battery when press-cutting the aforementioned storage battery, and a step of extracting a component contained in the aforementioned electrolytic solution after cutting.

According to the present invention, by supplying water during press-cutting, it is possible to recover chips and scraps discharged during press-cutting and the electrolytic solution squeezed out, and to recover components of the electrolytic solution.

Further, in the present invention, the aforementioned storage battery is a lithium ion secondary battery, the aforementioned electrode component is a positive electrode component constituted of a plurality of materials, and the aforementioned positive electrode component is constituted of a thin film-like positive electrode aluminum material and a layer of a positive electrode active material provided on a surface of the aforementioned positive electrode aluminum material; and a step of separating the aforementioned positive electrode aluminum material and the aforementioned positive electrode active material based on the aforementioned electric pulse discharge with respect to the aforementioned cut pieces, sinking the aforementioned positive electrode active material downward from the aforementioned sieve-like mounting member and leaving the aforementioned positive electrode aluminum material on an upper surface of the aforementioned mounting member may be included.

According to the present invention, by treating the positive electrode component of a lithium ion secondary battery with electric pulse discharge, the materials constituting the positive electrode component can be individually separated and recovered.

In addition, the aforementioned storage battery of the present invention is a nickel hydrogen secondary battery, and a step of simultaneously subjecting the aforementioned cut pieces of the positive electrode component and the negative electrode component among the aforementioned electrode components to the aforementioned electric pulse discharge may be included.

According to the present invention, in a nickel hydrogen secondary battery, the work efficiency can be improved by simultaneously decomposing the positive electrode component and the negative electrode component by electric pulse discharge.

Further, in the present invention, a nickel material constituting the aforementioned positive electrode component, an iron material constituting the negative electrode component, a housing of the aforementioned storage battery, and a separator provided between the aforementioned positive electrode component and the aforementioned negative electrode component may be separated from the aforementioned cut pieces based on the aforementioned electric pulse discharge.

According to the present invention, a plurality of materials can be separated at the same time by simultaneously subjecting the positive electrode component and the negative electrode component to a decomposition process by electric pulse discharge.

In addition, the present invention may also include a step of stacking and arranging the aforementioned cut pieces in a plurality of layers on an upper surface of the aforementioned mounting member so as to form an electrical path during discharge of the aforementioned electric pulse discharge.

According to the present invention, by stacking and arranging the cut pieces in a plurality of layers, the conductivity of electric pulses in the cut pieces can be increased, and the materials can be easily separated from each other.

The means proposed by the present invention in order to solve the above problems are listed below.
[1] A storage battery recycling method including: a step of disassembling into each constituent component based on a disassembly method in accordance with a type of storage battery; a step of cutting an electrode component among the aforementioned constituent components to generate cut pieces; a step of arranging the aforementioned cut pieces on a mounting member provided in a container containing water; a step of separating different types of materials from the aforementioned cut pieces by performing electric pulse discharge in water in the aforementioned container; and a step of sorting and recovering by type a plurality of materials separated from the aforementioned cut pieces.
[2] The storage battery recycling method according to [1], further including a step of recovering an electrolytic solution in the step of disassembling the aforementioned storage battery.
[3] The storage battery recycling method according to [1] or [2], further including a step of recovering the aforementioned water contained in the aforementioned container in which the aforementioned electric pulse discharge has been performed and extracting a component of an electrolytic solution dissolved in the aforementioned water based on electrodialysis.
[4] The storage battery recycling method according to any one of [1] to [3], further including a step of cleaning the aforementioned cut pieces with a solvent, and a step of extracting a component of the aforementioned electrolytic solution contained in the aforementioned solvent after cleaning.
[5] The storage battery recycling method according to any one of [1] to [4], wherein the aforementioned electric pulse discharge is performed by discharging electric pulses generated based on a pulse voltage of 1 to 90 kV into the aforementioned water a number of times in accordance with a solid-liquid ratio of the aforementioned cut pieces and the aforementioned water in the aforementioned container.
[6] The storage battery recycling method according to any one of [1] to [5], further including, when the aforementioned electrode component of the aforementioned storage battery is wound, a step of cutting the aforementioned electrode component in a wound state; and a step of unfolding the aforementioned electrode component and individually recovering a positive electrode component, a negative electrode component, and a separator.
[7] The storage battery recycling method according to any one of [1] to [5], further including, when the aforementioned electrode components of the aforementioned storage battery are stacked, a step of cutting the aforementioned electrode components in a stacked state.
[8] The storage battery recycling method according to any one of [1] to [7], further including, using a press mold having one or more punching dies with dimensions corresponding to sizes of one or more battery cells arranged in the aforementioned storage battery, a step of simultaneously press-cutting positions of one or more of the aforementioned battery cells and retrieving one or more of the aforementioned electrode components having the aforementioned dimensions.
[9] The storage battery recycling method according to [8], further including, in the step of press-cutting the aforementioned storage battery using the aforementioned press mold, a step of recovering the aforementioned electrolytic solution squeezed out from the aforementioned storage battery when press-cutting the aforementioned storage battery, and a step of extracting a component contained in the aforementioned electrolytic solution after cutting.
[10] The storage battery recycling method according to any one of [1] to [9], wherein the aforementioned storage battery is a lithium ion secondary battery, the aforementioned electrode component is a positive electrode component constituted of a plurality of materials, and the aforementioned positive electrode component is constituted of a thin film-like positive electrode aluminum material and a layer of a positive electrode active material provided on a surface of the aforementioned positive electrode aluminum material, the method further including a step of separating the aforementioned positive electrode aluminum material and the aforementioned positive electrode active material based on the aforementioned electric pulse discharge with respect to the aforementioned cut pieces, sinking the aforementioned positive electrode active material downward from the aforementioned sieve-like mounting member and leaving the aforementioned positive electrode aluminum material on an upper surface of the aforementioned mounting member.
[11] The storage battery recycling method according to any one of [1] to [9], further including a step of simultaneously performing the aforementioned electric pulse discharge with respect to the aforementioned cut pieces of the positive electrode component and the negative electrode component among the aforementioned electrode components, wherein the aforementioned storage battery is a nickel hydrogen secondary battery.
[12] The storage battery recycling method according to [11], wherein a nickel material constituting the aforementioned positive electrode component, an iron material constituting the negative electrode component, and a separator provided between the aforementioned positive electrode component and the aforementioned negative electrode component are separated from the aforementioned cut pieces based on the aforementioned electric pulse discharge.
[13] The storage battery recycling method according to any one of [1] to [12], further including a step of stacking and arranging the aforementioned cut pieces in a plurality of layers on an upper surface of the aforementioned mounting member so as to form an electrical path during discharge of the aforementioned electric pulse discharge.

### [Advantageous Effects of Invention]

According to the present invention, it is possible to realize efficient disassembly of a storage battery with a small environmental load, and to improve the resource recovery rate.

### [Brief Description of Drawings]

FIG. 1 is a diagram showing the overall process of a storage battery recycling method applied to a lithium ion secondary battery.
FIG. 2 is a diagram schematically showing the configuration of a discharge device.
FIG. 3 is a diagram schematically showing the configuration of a lithium ion secondary battery.
FIG. 4 is a diagram schematically showing a method for disassembling a lithium ion secondary battery.
FIG. 5 is a diagram schematically showing the configuration of a cleaning device.
FIG. 6 is a diagram schematically showing the configuration of an electric pulse discharge device.
FIG. 7 is a diagram schematically showing the configuration of a separation device.
FIG. 8 is a diagram schematically showing the configuration of an electrodialysis device.
FIG. 9 is a diagram showing the overall process of a storage battery recycling method applied to a nickel hydrogen secondary battery.
FIG. 10 is a diagram schematically showing the configuration of a unitized nickel hydrogen battery.
FIG. 11 is a diagram schematically showing the configuration of a disassembly device.
FIG. 12 is a flowchart showing each step of the storage battery recycling method.

### [Description of Embodiments]

Hereinafter, a storage battery recycling method according to the present invention will be described with reference to the drawings.

An object to be processed (processing object) through recycling is, for example, a used storage battery such as a lithium ion secondary battery and a nickel hydrogen secondary battery. Here, the term "used storage battery" broadly includes storage batteries that have been used once, and examples thereof include defective storage battery products generated during the production process, storage batteries that are discarded due to defects, longevity or the like of the equipment used, and used storage batteries that are discarded due to their own longevity.

Hereinafter, each process from storage battery disassembly to material separation and recovery based on the storage battery recycling method will be described.

### [First embodiment]

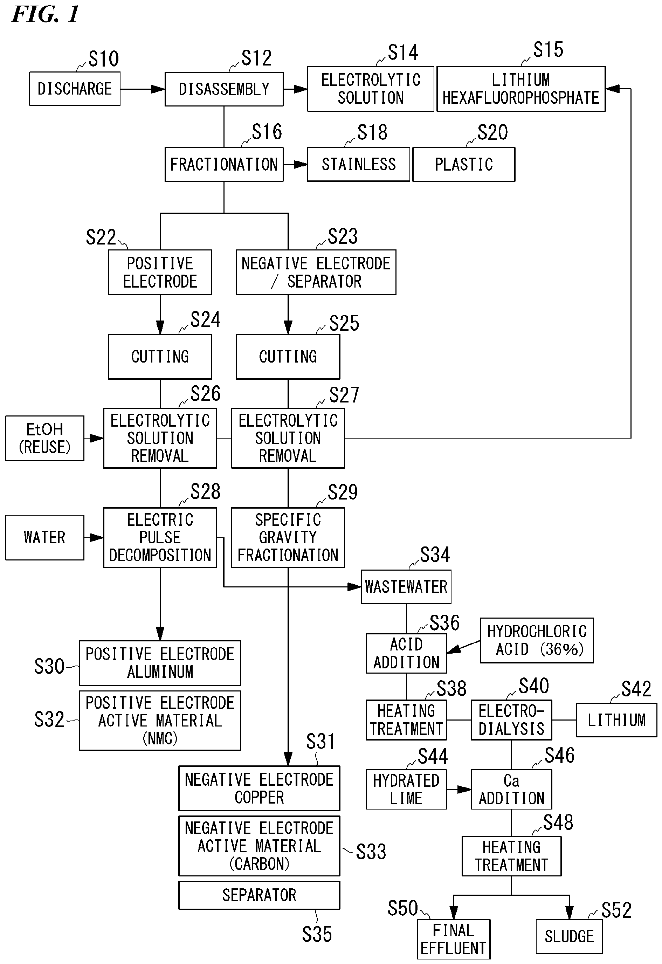

FIG. 1 shows the overall process of a method for recycling a lithium ion secondary battery. Hereinafter, the treatment process and equipment used for the treatment in each step of the overall process will be described.

A lithium ion secondary battery to be processed is first subjected to a discharge process (step S10). The processing object may have a residual voltage in a recovered state. In order to ensure safety when disassembling the processing object, it is necessary to measure the voltage before disassembly and discharge it if a residual voltage equal to or higher than the standard is present.

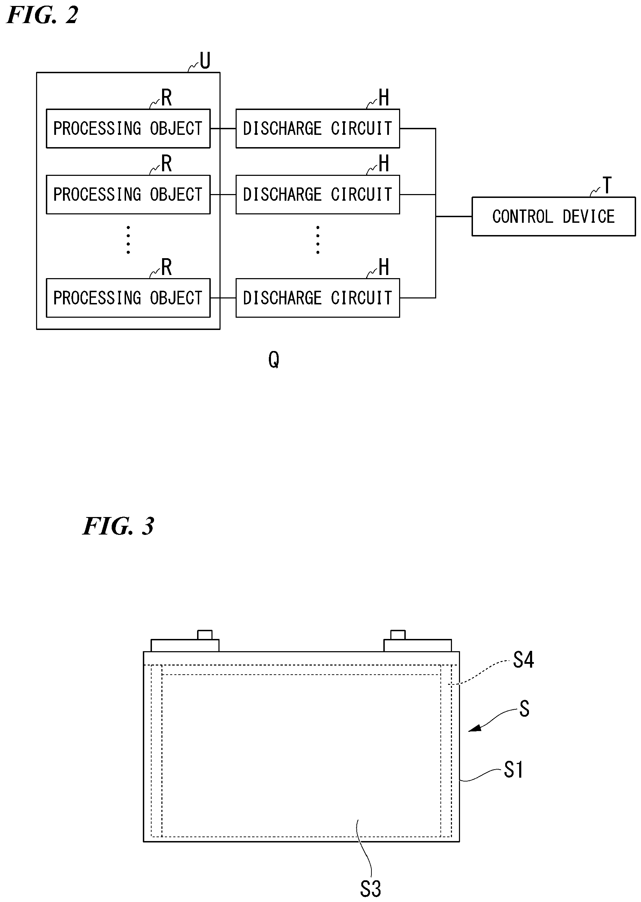

As shown in FIG. 2, a plurality of processing objects R are subjected to discharge treatment by a discharge device Q. The discharge device Q includes, for example, a discharge unit U that can arrange a plurality of processing objects, a plurality of discharge circuits H provided in accordance with each processing object R, and a control device T that is connected to the plurality of discharge circuits H and controls the discharge state of the plurality of processing objects R. The processing object R has a standardized shape. The processing object R is formed in various shapes, such as single cells having a circular or rectangular outer shape, and those with internal electrode components having a laminated structure or a winding structure. The processing objects R are sorted by type, shape, and the like. The sorted processing object R is installed in a discharge unit U designed in accordance with the shape of the processing object R.

The discharge unit U is formed, for example, depending on the shape of the processing object R, so that a plurality of processing objects R are freely attachable/detachable. The discharge unit U is configured in such a manner that the electrodes of the processing object R and the discharge circuit H are electrically connected when the processing object R is in a fixed state. The discharge circuit H has a circuit configuration that discharges the power stored in the processing object R according to the type and shape of the processing object R. The control device T that controls the discharge state may be connected to each discharge circuit H. The control device T controls on/off and discharge level of each discharge circuit H. The control device T may turn off the discharge circuit H when the discharge level of the processing object R becomes equal to or less than a set value. An indicator (not shown) that displays the voltage level of each processing object R may be connected to the discharge unit U.

Various types of indicators can be used as long as the voltage level can be determined through numerical values, level displays, color displays, and the like. Based on the display on the indicator, when the voltage level of the processing object R is equal to or less than a predetermined value, the processing object R is transported together with the discharge unit U, and the disassembly work is carried out. In the discharge process, the voltage level of the processing object R is preferably 2.0V or less, more preferably 1.0V or less, and still more preferably 0.5V or less.

After the discharge is completed, the processing object R is cut into components and disassembled (see step S12 in FIG. 1).

The processing object R is disassembled into constituent components, for example, based on a disassembly method depending on the type of storage battery. The storage battery as the processing object R is formed in various shapes such as a columnar shape, a box shape, and a unit shape. The processing object R is disassembled into constituent components such as electrodes and a main body portion (housing). Among the constituent components, electrode components in particular are formed of composite materials containing useful materials and are subject to recycling. The electrode component is cut, for example, based on a cutting method depending on the shape. Hereinafter, as an example, disassembly of a mass-produced automotive lithium ion secondary battery will be described.

As shown in FIG. 3, a lithium ion secondary battery S as the processing object R is, for example, a single cell and includes a box-shaped housing S1. The housing S1 is formed of, for example, stainless steel or the like. An electrode component S3 is provided inside the housing S1. The electrode component S3 is formed by winding a band-shaped electrode member. The electrode component S3 is fixed to a support member S4 provided inside the housing S1.

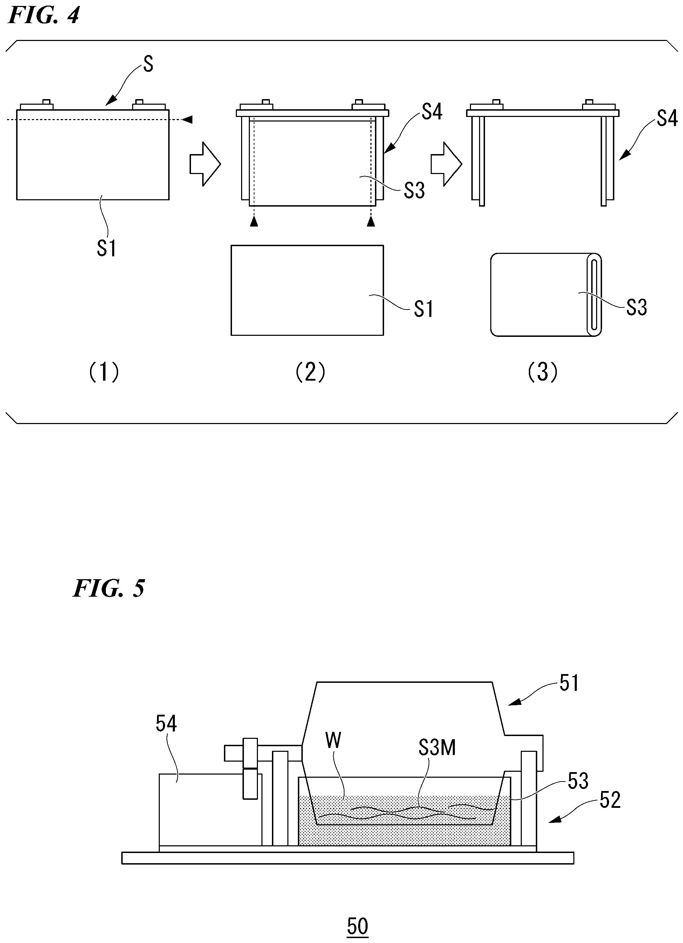

As shown in FIG. 4, in the lithium ion secondary battery S, a connecting portion between the housing S1 and the support member S4 is cut (see FIG. 4 (1)). Next, the housing S1 of the lithium ion secondary battery S is separated (see FIG. 4 (2)). At this time, the electrolytic solution in the housing S1 is recovered (see step S14 in FIG. 1). The surfaces of the inside of the housing S1 and the components in a state where the support member S4 and the electrode component S3 are connected are appropriately cleaned with a solvent such as ethanol that can dissolve the electrolytic solution. It is preferable that the solvent after cleaning is recovered, and the components of the electrolytic solution are recovered and reused as described below. As the solvent for cleaning, in addition to ethanol, other solvents such as dimethyl carbonate, acetone, methanol, supercritical solvent CO₂, and liquid CO₂ may be used as long as they can dissolve the electrolytic solution. Next, in the lithium ion secondary battery S from which the housing S1 has been removed, the connecting portion between the support member S4 and the electrode component S3 is cut, and the support member S4 and the electrode component S3 are separated (FIG. 4 (3)).

Each of the disassembled components are fractionated into different materials (see step S16 in FIG. 1). The housing S1 is fractionated as stainless steel (see step S18 in FIG. 1). In the housing S1, an insulating sheet (not shown) provided between an inner wall of the housing and the electrode component S3 is fractionated as a plastic material (step S20 in FIG. 1).

The wound electrode component S3 is unfolded and disassembled into a strip-shaped positive electrode component, negative electrode component, and separator, and the positive electrode component is fractionated (see step S22 in FIG. 1). At this time, the negative electrode component and the separator are also fractionated (see step S23 in FIG. 1). The positive electrode component is cut into cut pieces having predetermined dimensions using a cutting device (not shown) (see step S24). It is preferable that the cut piece of the positive electrode component is cleaned with a solvent such as the above-mentioned ethanol that can dissolve the components of the electrolytic solution to remove the remaining electrolytic solution (see step S26 in FIG. 1). The solvent such as ethanol used for cleaning is recovered, and the components of the electrolytic solution are recovered based on chemical treatment and reused for cleaning (see steps S14 and S15 in FIG. 1).

As shown in FIG. 5, the cut pieces of the positive electrode component are cleaned by a cleaning device 50. The cleaning device 50 is provided, for example, with a drum 51 whose surface along the circumferential direction of the rotating shaft is formed of a perforated metal, a pedestal 52 that rotatably supports the drum 51, a container 53 that is provided between the pedestal 52 and the drum 51 and contains a cleaning fluid W, and a drive unit 54 that rotationally drives the drum 51. In the container 53, a solvent such as ethanol which can dissolve the electrolytic solution is contained as the cleaning fluid W. A portion of the side surface of the drum 51 along the circumferential direction is immersed below the liquid level of the cleaning fluid W.

Inside the drum 51, cut pieces S3M of the positive electrode component are arranged. When the drive unit 54 rotationally drives the drum 51, the cut pieces S3M are stirred in the cleaning fluid W in a lower portion inside the drum 51 in accordance with the movement of the inner wall of the drum 51, and the electrolytic solution adhered to the surface is removed (see step S26 in FIG. 1). The cut pieces of the positive electrode component after cleaning are recovered. The cleaning fluid after cleaning contains an electrolytic solution, and is chemically treated as described below to recover components in the electrolytic solution (see step S15 in FIG. 1). A portion of the positive electrode active material separated from the positive electrode component during cleaning accumulates at a bottom portion of the container 53, and is therefore recovered as appropriate. The positive electrode components are separated into different materials by the electric pulse discharge device 1 (see step S28 in FIG. 1).

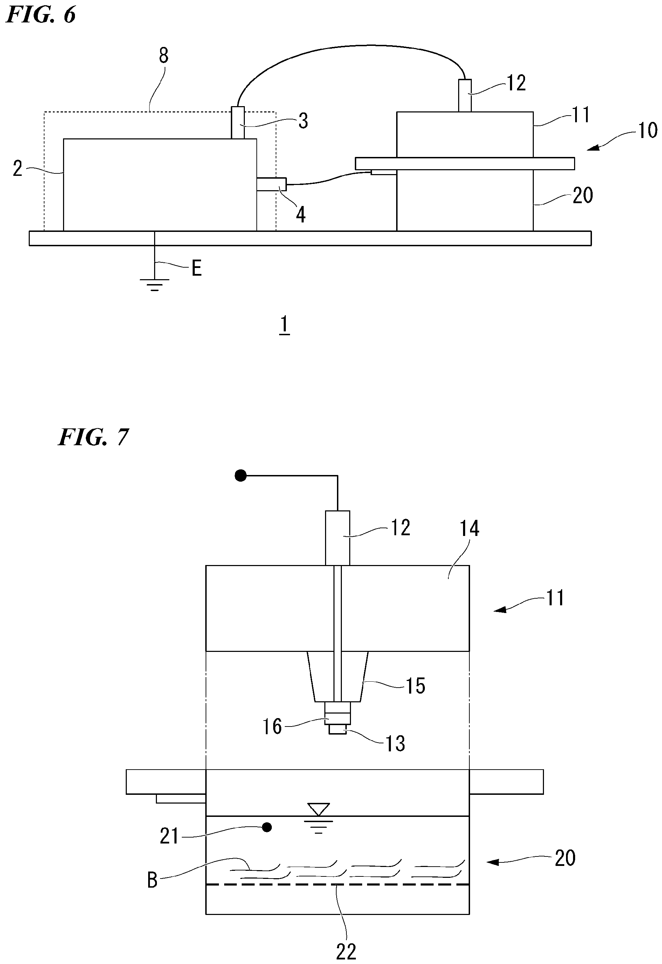

As shown in FIG. 6, the electric pulse discharge device 1 includes a power supply device 2 that generates electric power, and a separation device 10 that separates components constituting a storage battery into different materials (in other words, separates them into a plurality of elements made of different materials). The power supply device 2 is a device that momentarily outputs a large amount of power at a high voltage in a short period of time of, for example, microseconds or nanoseconds. The high voltage is preferably from 1 to 90 kV, more preferably from 15 to 80 kV, and still more preferably from 30 to 60 kV. The high voltage may be, for example, 60 kV. The power supply device 2 has a capacitor that stores a predetermined level of charge therein, and is configured to be dischargeable instantaneously. The power supply device 2 is covered with a Faraday cage 8 that electromagnetically shields the power supply device 2. The power supply device 2 is electrically connected to the separation device 10 via an output terminal 3 that outputs a pulse voltage. The power supply device 2 is connected to an electrical ground E that electrically connects itself to the ground side. The power supply device 2 is electrically connected to the separation device 10 via a ground terminal 4 connected to the electrical ground E.

As shown in FIG. 7, the separation device 10 includes a container 20 in which a storage space is formed, and a discharge unit 11 that performs electric pulse discharge inside the container 20. The discharge unit 11 is electrically connected to the power supply device 2 via an input terminal 12. The input terminal 12 is electrically connected to a working electrode 13 that discharges electrical pulses. An insulating lid portion 14 is provided between the input terminal 12 and the working electrode 13. The lid portion 14 is formed of, for example, a resin material. A support portion 15 that supports the working electrode 13 is provided on the lower surface side of the lid portion 14.

The support portion 15 is formed into a cone shape that protrudes downward. The support portion 15 is formed of an insulating material. The support portion 15 is formed of, for example, an insulating material such as polycarbonate, polyethylene, ABS, and vinyl chloride (rigid), depending on the magnitude of the power supply voltage. The support portion 15 may be formed of other materials. The support portion 15 instantaneously discharges the electric charge of the pulse power stored in the power supply device 2 and inputted from the input terminal 12 from the working electrode 13. The electrostatic capacity of a power storage unit of the power supply device 2 is, for example, 1.6 µF. The electrostatic capacity is preferably from 0.2 to 1.6 µF, and more preferably from 0.4 to 0.6 µF. A metal washer 16 that adjusts the distance with a mounting member 22 arranged below the working electrode 13 and described later is sandwiched between the support portion 15 and the working electrode 13. For example, the distance between the tip portion (lower end portion) of the working electrode 13 and the mounting member 22 is preferably from 0.1 to 5 cm, more preferably from 0.3 to 3 cm, and particularly preferably from 0.5 to 2.5 cm. When this distance is within the above range, the effects of the present invention can be particularly enhanced. More specifically, when the above distance is equal to or more than the above lower limit value, high energy can be easily obtained. When the above distance is equal to or less than the above upper limit value, malfunctions can be easily prevented.

The container 20 is arranged below the discharge unit 11. The container 20 is formed of a metal material (for example, a stainless steel material). A storage space 21 that can store water is formed within the container 20. The inside of the storage space 21 is filled with water when performing electric pulse discharge. The mounting member 22 for placing cut pieces B is provided within the storage space 21. The cut pieces B are obtained by cutting components (such as positive electrode components) of a disassembled storage battery.

The mounting member 22 is formed into, for example, a sieve-like plate shape. The mounting member 22 is formed of, for example, a perforated metal in which countless (a plurality of) through holes are formed using a metal material (for example, a stainless steel material). The diameter of the through hole is, for example, 3 mm. The cut piece B constituted of a plurality of materials is placed on the mounting member 22.

As a more specific example, the mounting member 22 may be made of a metal mesh (for example, a stainless steel mesh) or an expanded metal. The opening size of the metal mesh or expanded metal may be selected appropriately depending on the purpose, but is preferably from 1 to 50 mm, more preferably from 3 to 10 mm, and particularly preferably from 4 to 6 mm. When the opening size is equal to or larger than the above lower limit value, sinking of the above positive electrode active material can be promoted. When the opening size is equal to or less than the above upper limit value, it is possible to prevent the positive electrode aluminum material (positive electrode current collector) from sinking downward from the above mounting member.

Further, a plurality of mounting members 22 with different openings may be used. For example, by arranging a metal mesh with a large opening in the upper stage and a metal mesh with a small opening in the lower stage, finer fractionation becomes possible.

After the cut piece B is placed on the mounting member 22, an opening in an upper portion of the container 20 is closed by the lid portion 14. Thereafter, the electric pulse discharge is performed from the working electrode 13 toward the cut pieces B based on the pulse voltage supplied from the power supply device 2 in the water within the storage space 21. The electric pulse discharged from the tip of the working electrode 13 propagates through the water, the cut piece B, and the mounting member 22, and is discharged to the ground via the working electrode 13, the ground terminal 4, and the electrical ground E. If a voltage exceeding the dielectric breakdown strength of an insulating medium (water, air) is momentarily applied between the working electrode 13, the container 20, and both electrodes in the container 20, instantaneous discharge (electrical pulse) occurs in the insulating medium in the container 20.

At this time, the cut piece B formed by a conductor becomes an electrical path. When electricity momentarily passes through the cut piece B, a high current momentarily flows, thereby decomposing different materials.

It should be noted that the frequency of the electrical pulse to be discharged is preferably from 0.5 to 10 Hz, more preferably from 0.5 to 5 Hz, and particularly preferably from 0.5 to 2 Hz. When the frequency is equal to or higher than the lower limit value of the above range, electric pulse decomposition is facilitated. When the frequency is equal to or lower than the upper limit value of the above range, the electric pulse discharge device 1 does not become too expensive, which is advantageous in terms of cost.

Further, when an electric pulse is discharged into the container 20, bubbles grow instantaneously in the water inside the container 20 based on the electric pulse, and a shock wave propagates in the water. Since countless bubbles are present in the water, countless shock waves are generated inside the container 20. The shock wave propagated in the water acts directly on the cut piece B changed by the influence of the electric pulse, or acts indirectly by being reflected on the inner wall of the container 20. Further, a composite wave of shock waves or a fused wave front resulting from a composite of an incident wave and a reflected wave of the shock waves may act on the cut piece B.

In the cut piece B, due to the electrical action of electric pulses and the influence of underwater shock waves, the interface between different phases of a plurality of materials become the starting point of ductile cracks and brittle cracks, and the state changes as deformation and crushing progress to separate the material constituting the cut piece B. The size of the crushed pieces of each material after separation is adjusted based on the voltage and frequency of electrical pulse discharges.

The cut piece B of the positive electrode component is arranged on the upper surface of the mounting member 22 provided in the container 20 containing water (see FIG. 7). It is preferable to stack and arrange the cut pieces in a plurality of layers on the upper surface of the mounting member 22. A positive electrode component is constituted of a plurality of materials. The positive electrode component is typically constituted of a thin film-like positive electrode aluminum material (positive electrode current collector) and layers of a positive electrode active material formed on the front and back surfaces of the positive electrode aluminum material. The positive electrode active material is, for example, ternary nickel cobalt lithium manganate. The positive electrode active material may be formed of other materials. After covering the container 20 with the lid portion 14, electric pulse discharge is performed a predetermined number of times in the water in the container 20 to separate different types of materials from the cut pieces. The amount of water is, for example, 3L. The amount of water is preferably from 1 to 30 L, and more preferably from 2 to 20 L. When the amount of water is equal to or more than the above lower limit value, electric pulse decomposition can be performed efficiently. When the amount of water is equal to or less than the above upper limit value, it is advantageous in terms of cost.

It should be noted that an input port in order to load the cut piece B of the positive electrode component may be provided on a side wall of the container 20.

Further, it may be configured so that the cleaning device 50 and the input port of the electric pulse discharge device 1 are connected by a transport path such as a belt conveyor, and the cut pieces of the electrode component that have been cleaned by the cleaning device 50 are automatically loaded into the electric pulse discharge device 1.

In the electric pulse discharge, electric pulses are discharged in water a predetermined number of times at a predetermined solid-liquid ratio based on a pulse voltage of 1 to 90 kV. The voltage is preferably from 1 to 90 kV, more preferably from 15 to 80 kV, and still more preferably from 30 to 60 kV. For example, the voltage may be 60 kV. The solid-liquid ratio is a ratio of the mass of the cut piece with respect to the mass of water ((mass of the cut piece)/ (mass of water)). The predetermined number of times is set according to the degree of crushing applied to the cut piece based on the electrical pulse. The predetermined number of times is appropriately set in order to prevent the cut pieces from being crushed excessively and to adjust the size of the crushed pieces generated by crushing the cut pieces in accordance with the requirements of the reuse destination. It is preferable to increase the predetermined number of times as the solid-liquid ratio increases. The predetermined number of times is, for example, from 1 to 200 times, and preferably from 10 to 40 times, under the conditions of a solid-liquid ratio of 50/100 to 1/10,000 and an electric pulse discharge of 1 to 90 kV (for example, 60 kV). The solid-liquid ratio may be, for example, 50/100 to 1/10,000, 30/100 to 1/1,000, or 20/100 to 1/100.

Further, the storage battery recycling device of the present invention may be configured so as to perform electric pulse discharge under the following conditions:
(1) The pulse voltage for electric pulse discharge is preferably from 1 to 90 kV, more preferably from 15 to 80 kV, and particularly preferably from 30 to 60 kV; and
(2) The frequency of the pulse voltage is preferably from 0.5 to 10 Hz, more preferably from 0.5 to 5 Hz, and particularly preferably from 0.5 to 2 Hz.

The above configuration can particularly enhance the effects of the present invention.

During the discharge of the electric pulse discharge, an electrical path is formed between the layers of the cut pieces stacked in a plurality of layers. The positive electrode active material is uniformly peeled off by allowing a pulse current to pass through the cut piece. Further, the shock waves generated when the electric pulse propagates in water act on the cut pieces, thereby separating the cut pieces into the positive electrode aluminum material and the positive electrode active material, and crushing and deforming each material into smaller and finer pieces than the cut pieces.

Based on the electric pulse discharge with respect to the cut pieces, among the separated and crushed positive electrode aluminum material and positive electrode active material, the positive electrode active material sinks downward through countless through holes formed in the sieve-like mounting member 22, and the positive electrode aluminum material remains on the upper surface of the mounting member 22. The positive electrode aluminum material and the positive electrode active material separated from the cut pieces are sorted and recovered (see steps S30 and S32 in FIG. 1). The water in the container 20 is also recovered (see step S34 in FIG. 1).

The wastewater contains, for example, lithium hexafluorophosphate in the eluted electrolytic solution, and it is preferable to recover resources such as lithium based on chemical treatment or electrodialysis.

An inorganic acid aqueous solution is added to the wastewater. Examples of the inorganic acid aqueous solution include hydrochloric acid, sulfuric acid aqueous solution, and nitric acid aqueous solution. Alternatively, hydrogen chloride gas may be bubbled into the wastewater. When using hydrochloric acid as the inorganic acid aqueous solution, for example, hydrochloric acid whose concentration is adjusted to 36% by mass is added, and the concentration of hydrochloric acid in the wastewater is adjusted to 18% by mass (see step S36 in FIG. 1). The concentration of inorganic acid in the wastewater is, for example, preferably from 12 to 36% by mass, and more preferably from 18 to 24% by mass. The concentration of inorganic acid in the inorganic acid aqueous solution to be added is set in accordance with the above concentration of inorganic acid in the wastewater. Subsequently, the wastewater is heated to 65°C and held for 3 hours or more, and the hexafluorophosphate ions are completely decomposed into fluoride ions and phosphate ions (see step S38 in FIG. 1). Then, the wastewater is subjected to electrodialysis (see step S40 in FIG. 1). The heating temperature of the wastewater is preferably from 40 to 100°C, and more preferably from 60 to 80°C. When the heating temperature of the wastewater is equal to or higher than the lower limit value of the above range, decomposition is facilitated. When the heating temperature of the wastewater is equal to or lower than the upper limit value of the above range, the wastewater is unlikely to boil.

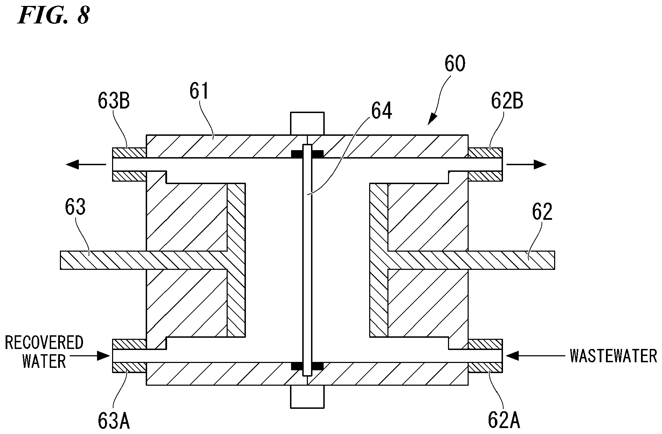

As shown in FIG. 8, electrodialysis is performed using an electrodialysis device 60. The electrodialysis device 60 includes, for example, a container 61. An anode electrode 62 is provided on one side of the container 61. The anode electrode 62 is formed of, for example, SUS304. A cathode electrode 63 is provided on the other side of the container 61. The cathode electrode 63 is formed of, for example, nickel-plated SUS304. Inside the container 61, the anode electrode 62 and the cathode electrode 63 are separated by a semipermeable membrane 64. The semipermeable membrane 64 is formed of a material that does not allow anion species in the wastewater and precipitated calcium to pass through.

An inlet 62A and an outlet 62B for circulating the wastewater are provided in a space inside the container 61 on the anode electrode 62 side. An inlet 63A and an outlet 63B for circulating the recovered water are provided in a space inside the container 61 on the cathode electrode 63 side. In electrodialysis, a voltage is applied between both electrodes, the wastewater is circulated to the anode side while the recovered water is circulated to the cathode side, and lithium ions that have passed through the semipermeable membrane 64 are transferred to the cathode side to recover lithium ions contained in the recovered water (see step S42 in FIG. 1). The solvent for the recovered water is pure water. The voltage between the two electrodes is, for example, 2V. The voltage between the two electrodes is preferably from 1 to 20V, and more preferably from 2 to 5V.

According to the electrodialysis device 60, for example, lithium ions can be recovered from 3 L of wastewater in 96 hours with a recovery rate of 88%.

Next, hydrated lime (calcium hydroxide) is added to the wastewater for neutralization treatment (see step S44 in FIG. 1). Calcium ions are added into the wastewater solution based on hydrated lime (see step S46 in FIG. 1). The wastewater is heated, and the fluorine ions and phosphate ions released in the solution are fixed to calcium ions and treated down to the standard value or less (see step S48 in FIG. 1). As for drainage, the supernatant of the resulting precipitate is discharged as a final effluent (see step S50 in FIG. 1). The precipitate is recovered as sludge (see step S52 in FIG. 1).

Materials of the negative electrode components after fractionation (see step S16 in FIG. 1) are also separated and recovered. Like the positive electrode component, the negative electrode component is constituted of a plurality of materials. The negative electrode component is constituted of a negative electrode copper foil material, a negative electrode active material formed on the front and back surfaces of the negative electrode copper foil material, and a thin film-like separator provided on the surface of the negative electrode active material. The negative electrode active material is, for example, carbon. The separator is, for example, a microporous membrane made of polyolefin. The negative electrode component is cut into cut pieces having predetermined dimensions using a cutting device (not shown) (see step S25 in FIG. 1). The cut piece of the negative electrode component is cleaned with a solvent, such as an ethanol solution, for example, that can dissolve the electrolytic solution and the remaining electrolytic solution is removed (see step S27 in FIG. 1). As the solvent for cleaning, a solvent other than ethanol may be used as long as it can dissolve the electrolytic solution.

Regarding the negative electrode component, since detachment of the separator, negative electrode copper foil material, and negative electrode active material is easy, separation based on the difference in specific gravity is performed by, for example, sieving by applying physical vibration in water (see step S29 in FIG. 1). The negative electrode components may be subjected to a wind force in the air using an air classifier, so that each member is subjected to specific gravity sorting based on the difference in floating velocity caused by the specific gravity of each member. A negative electrode copper foil material is recovered from the negative electrode component (see step S31 in FIG. 1). A negative electrode active material (carbon) is recovered from the negative electrode component (see step S33 in FIG. 1). The separator is recovered from the negative electrode component (see step S35 in FIG. 1). The waste liquid containing the electrolytic solution recovered in steps S14, S26, and S27 contains lithium hexafluorophosphate (see step S15 in FIG. 1). This waste liquid is chemically treated together with the electrolytic solution recovered in step S14, and lithium is recovered (see step S15 in FIG. 1). The waste liquid containing ethanol is separated into ethanol and electrolytic solution by distillation of the like, and the electrolytic solution is recovered while ethanol is also recovered and reused for cleaning.

According to the storage battery recycling method described above, the positive electrode active material can be recovered with a recovery rate of 95% or higher. According to the storage battery recycling method, by treating only the positive electrode (positive electrode component) with electric pulse discharge, it is possible to reduce the contamination of impurities such as copper and carbon. Carbon is a repellent substance in the filtration process when cobalt and nickel are recovered by hydrometallurgy of the positive electrode active material, and the less the better. Copper is also a similar repellent substance, and the content thereof is preferably less than 0.5% by mass. Aluminum is a metal to be avoided in the subsequent hydrometallurgical refining (cobalt and nickel recovery), and the content thereof is preferably less than 2% by mass. Materials conventionally recovered after roasting of lithium ion batteries generally contain several percent by mass or more of aluminum.

According to the storage battery recycling method, the contents of impurities contained in the recovered positive electrode active material are 0% by mass for carbon, copper, and plastic, and 0.4% by mass or less for aluminum. According to the storage battery recycling method, by using electric pulse decomposition for the separation treatment of the positive electrode member, the treatment can be performed at a solid-liquid ratio of about 1/100. According to the storage battery recycling method, the treatment time can also be considerably shortened, as compared to the conventional cases. According to the storage battery recycling method, the treatment time for electric pulse decomposition can be reduced to about 1 minute. The storage battery recycling method can be applied for recycling a large amount of waste batteries.

### [Second embodiment]

A storage battery recycling method using electric pulse discharge may be applied for recycling nickel hydrogen secondary batteries. In the following description, the same names and reference numerals will be used for the same configurations as in the above embodiment, and duplicate descriptions will be omitted as appropriate.

That is, in the following description, configurations with no particular description are the same configurations as those of the above embodiment, and their functions and effects are also the same.

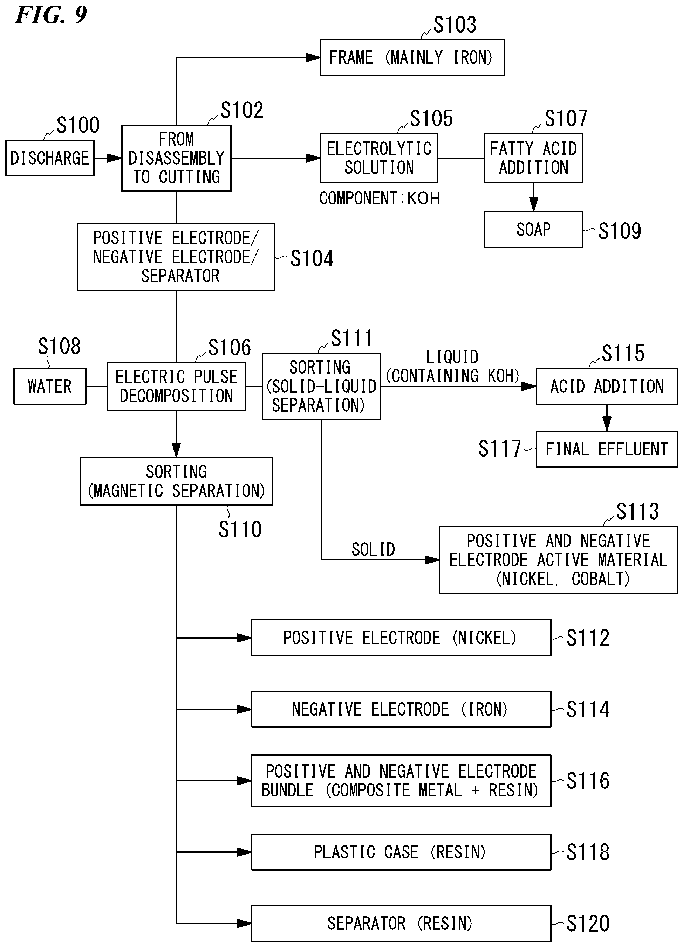

FIG. 9 shows the overall process of a method for recycling a nickel hydrogen secondary battery F as the processing object R. The processing object R has a circular or rectangular outer shape, and some of the internal electrode components have a laminated structure or a winding structure. Some of those with electrode components having a winding structure are single cells.

Some of those with electrode components having a laminated structure are obtained by integrating a plurality of cells into a unit. Hereinafter, as an example, disassembly of a mass-produced nickel hydrogen secondary battery unitized for use in vehicles will be described.

The nickel hydrogen secondary battery to be processed is, for example, a unitized stacked storage battery. First, the nickel hydrogen secondary battery to be processed is discharged using the discharge device Q (step S100). Next, the nickel hydrogen secondary battery is disassembled using a disassembly device N (step S102). The constituent components punched out by the disassembly device N include the housing and electrode components of the nickel hydrogen secondary battery. The electrode components include a positive electrode component, a negative electrode component, and a separator provided between the positive electrode component and the negative electrode component.

The electrode components are stored inside the housing in such a manner that layers of a sheet-like positive electrode component, a separator, and a negative electrode component are laminated in a plurality of layers. Therefore, the electrode components of each battery cell are punched out into rectangular cut pieces having a predetermined dimension F3 in a stacked state by the disassembly device N.

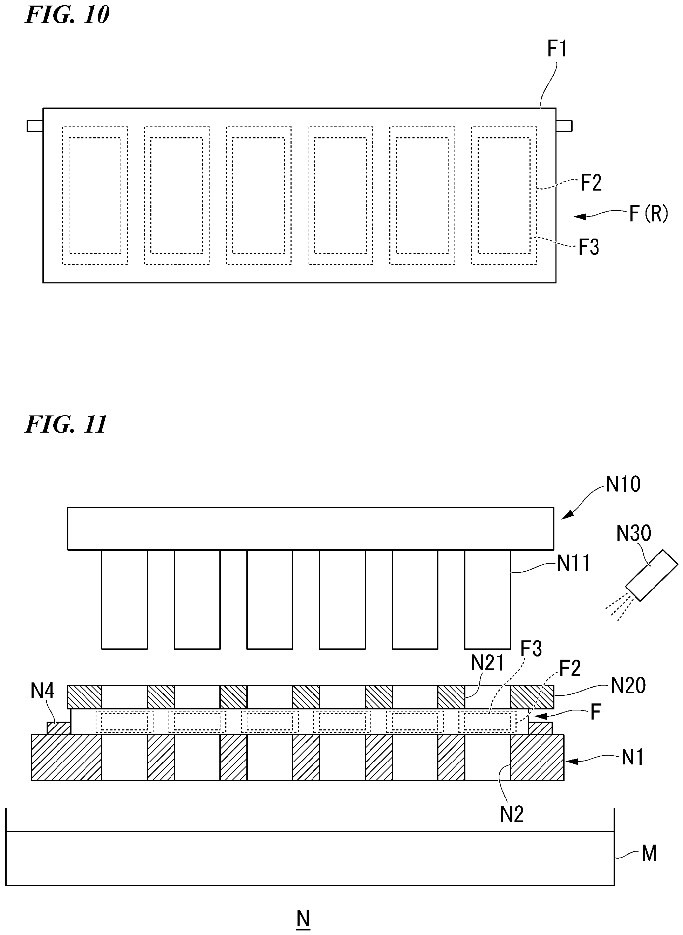

As shown in FIG. 10, the nickel hydrogen secondary battery F as the processing object R is formed into a unit, for example, by arranging one or more battery cells F2 inside a housing F1. In the unitized nickel hydrogen secondary battery F, the positional relationship of each battery cell F2 is standardized. In each battery cell F2, sheet-like electrode components among the constituent components are stacked and contained. In order to retrieve the electrode component from the battery cell F2, it is necessary to cut out and disassemble a rectangular region having a predetermined dimension F3, which is slightly smaller than the outer dimension of a rectangle when viewed from the side surface direction of the maximum area of the battery cell F2.

The predetermined dimension F3 is set in accordance with the outer dimension of the battery cell F2. The predetermined dimension F3 is set to a dimension that allows the electrode component to be cut out while maintaining the shape and maximizes the electrode component without waste. The predetermined dimension F3 is appropriately set based on the results of an experiment in which battery cells F2 are cut according to their outer dimensions. Since the positional relationship of one or more battery cells F2 is standardized, the positional relationship of each predetermined dimension F3 is also determined. For example, the distance from the outline of the battery cell F2 to the predetermined dimension F3 is preferably from 0.1 to 10 mm, and more preferably from 1 to 5 mm. The distance from the outline of the battery cell F2 to the predetermined dimension F3 may be, for example, a distance between one side of a rectangle of the battery cell F2 in FIG. 10 and another side of the predetermined dimension F3 that is parallel to and closest to the above one side. Further, when one point on the outer periphery of the battery cell F2 (point A) and the center of gravity of the battery cell F2 are connected, the distance from the outline of the battery cell F2 to the predetermined dimension F3 may be a distance between point A and the intersection point (point B) with the predetermined dimension F3.

As shown in FIG. 11, the battery cell F2 is disassembled, for example, by the disassembly device N using a press mold. The disassembly device N includes a press mold having one or more punching dies having predetermined dimensions corresponding to the sizes of one or more battery cells arranged in the storage battery. The disassembly device N is configured so as to simultaneously press-cut positions of one or more battery cells and retrieve one or more electrode components having a predetermined size. The disassembly device N includes, for example, a mounting table N1 on which the nickel hydrogen secondary battery F is placed, a punching die unit N10 arranged in an upper portion of the mounting table N1, a stripper N20, and a water supply unit N30 that supplies water. The press mold is constituted of the mounting table N1, the stripper N20, and the punching die unit N10. The punching die unit N10 is connected to, for example, a press machine, and disassembles the nickel hydrogen secondary battery F using a punching die.

For example, a rectangular through hole N2 formed to match the shape of the predetermined dimension F3 is formed in the mounting table N1. One or more through holes N2 are arranged in accordance with the positional relationship of one or more battery cells F2. The nickel hydrogen secondary battery F is arranged on the upper surface side of the mounting table N1 so that each through hole N2 corresponds to the position of each battery cell F2.

A stopper N4 for positioning the housing F1 of the nickel hydrogen secondary battery F is provided on the upper surface of the mounting table N1. The stopper N4 is formed so as to protrude upward from the upper surface of the mounting table N1. The nickel hydrogen secondary battery F positioned on the upper surface of the mounting table N1 is disassembled by the punching die unit N10. The punching die unit N10 is installed so as to be freely movable from above to below the mounting table N1. The punching die unit N10 includes, for example, one or more punches N11. Each punch N11 is arranged, for example, in accordance with the position of each through hole N2. Each punch N11 is formed into a bar shape with a rectangular cross section that matches the predetermined dimension F3.

The plate-shaped stripper N20 is arranged between the punching die unit N10 and the mounting table N1. One or more through holes N21 are formed in the stripper N20 in accordance with the position of each through hole N2. The stripper N20 is provided so as to be freely movable in the vertical direction in accordance with the positions of each through hole N21 and each through hole N2. After installing the nickel hydrogen secondary battery F on the mounting table N1, the stripper N20 is arranged on the nickel hydrogen secondary battery F. The nickel hydrogen secondary battery F is sandwiched between the stripper N20 and the mounting table N1 and is securely fixed.

The punching die unit N10 moves downward, each punch N11 passes through each through hole N21 of the stripper N20 and bites into each battery cell F2, and each punch N11 passes through the through hole N2 by about several millimeters, thereby simultaneously punching out each of the battery cells F2 into a shape of the predetermined dimension F3. At this time, water may be supplied to the upper surface of the stripper N20 from the water supply unit N30. Further, the mounting table N1, the stripper N20, and the punching die unit N10 may be placed in water. Each constituent component of each battery cell F2 punched out into a shape of the predetermined dimension F3 falls into a lower container M. Water is stored in the container M.

At this time, the inside of the battery cell F2 is pressed and the electrolytic solution inside leaks out and is recovered into the lower container M together with the water supplied from the water supply unit N30 (see step S105 in FIG. 9). Each of the constituent components includes the housing F1 and electrode components of the nickel hydrogen secondary battery F. The electrode components include a positive electrode component, a negative electrode component, and a separator provided between the positive electrode component and the negative electrode component.

When the electrode components fall into the container, the electrolytic solution adhered to each electrode component diffuses into the water in the container M. The water in the container M is recovered, and the components of the electrolytic solution are treated based on chemical treatment as described below. Each of the punched constituent components is recovered. The wreckage of the housing F1 after being punched out are cleaned, for example, by the cleaning device 50 (see FIG. 5). In a disassembly process by the disassembly device N, for example, an iron frame included in the housing F1 is fractionated (FIG. 9, step S103). During disassembly by the disassembly device N, the electrolytic solution is recovered in water (FIG. 9, step S105).

The component of the electrolytic solution is, for example, potassium hydroxide (KOH). A fatty acid is added to the waste liquid containing the recovered electrolytic solution (FIG. 9, step S107). As a result, soap is produced as a byproduct (FIG. 9, step S109). The cut pieces of the electrode component obtained by fractionating the frame of the housing include a positive electrode component, a negative electrode component, and a separator (FIG. 9, step S104). The cut pieces of the electrode component are loaded into the separation device 10 that uses electrical pulses (FIG. 9, step S106). The separation device 10 is filled with water (FIG. 9, step S108).

The cut pieces of the electrode component are decomposed by the separation device 10 using electric pulse discharge. The conditions for electric pulse discharge can be the same as the conditions described for the lithium ion secondary battery. The decomposed electrode components are sorted using magnetic separation (FIG. 9, step S110). A nickel material constituting the positive electrode component is recovered from the cut pieces of the electrode component (FIG. 9, step S112). An iron material constituting the negative electrode component is recovered from the cut pieces of the electrode component (FIG. 9, step S114). A positive and negative electrode bundle containing a composite metal and a resin material is recovered from the cut pieces of the electrode component (FIG. 9, step S116). Plastic components of the housing of the storage battery are recovered from the cut pieces (FIG. 9, step S118). A separator provided between the positive electrode component and the negative electrode component is recovered from the cut piece (FIG. 9, step S120).

The water used in the electric pulse discharge process is recovered, and the wastewater is filtered with a filter to separate solids and liquids (FIG. 9, step S111). The positive electrode active material and negative electrode active material contained in the filtered solids are recovered (FIG. 9, step S113). The filtered wastewater contains an electrolytic solution (for example, sodium hydroxide), and an acid is added thereto for neutralization (FIG. 9, step S115). The neutralized wastewater that satisfies the standards is discharged into the sewer (FIG. 9, step S 117).

According to the storage battery recycling method according to the second embodiment, materials can be recovered based on simultaneous decomposition process on the positive electrode component and the negative electrode component of a nickel hydrogen secondary battery by electric pulse discharge, and the amount of CO₂ generation can be reduced, as compared to the conventional method involving roasting. According to the storage battery recycling method according to the second embodiment, the working hours can be considerably reduced, as compared to the conventional method.

### [Modified example]

For example, electric pulse decomposition by the electric pulse discharge device 1 may be performed on a negative electrode component of a lithium ion secondary battery. In the electric pulse decomposition of a negative electrode component of a lithium ion secondary battery, following disassembly by the disassembly device N, the negative electrode component may be treated by the electric pulse discharge device 1 in a state of being mixed with cut pieces of the positive electrode component. That is, the lithium ion secondary battery may be disassembled by the disassembly device N. However, when recovering the positive electrode active material by mixing the positive electrode component and the negative electrode component and performing an electric pulse decomposition process, the mixing rate of carbon and copper in the negative electrode active material increases, as compared to the case where the positive electrode component is treated alone. Therefore, when the cut pieces are decomposed by electric pulse discharge using this method, the recovered positive electrode active material can be used only when the incorporation of carbon and copper is allowed.

Based on the electric pulse discharge with respect to the cut pieces, among the separated and crushed positive electrode aluminum material, positive electrode active material, negative electrode copper foil material, and negative electrode active material, the positive electrode active material and the negative electrode active material sink downward through countless through holes formed in the sieve-like mounting member 22, and the positive electrode aluminum material and the negative electrode copper foil material remain on the upper surface of the mounting member 22. A plurality of materials separated from the cut pieces are sorted by type and recovered. The water in the container 20 is also recovered, and the components of the electrolytic solution remaining in the cut pieces and eluted into the water are chemically treated.

According to the storage battery recycling method according to the modified example, the cut pieces of the positive electrode component and the negative electrode component are simultaneously subjected to a decomposition process by electric pulse discharge in a decomposition device, so that the time required for the process is shortened. In addition, the disassembly process by the disassembly device N may be applied to a stacked lithium ion secondary battery. Further, the storage battery recycling method for a wound lithium ion secondary battery may be applied to a wound nickel hydrogen secondary battery.

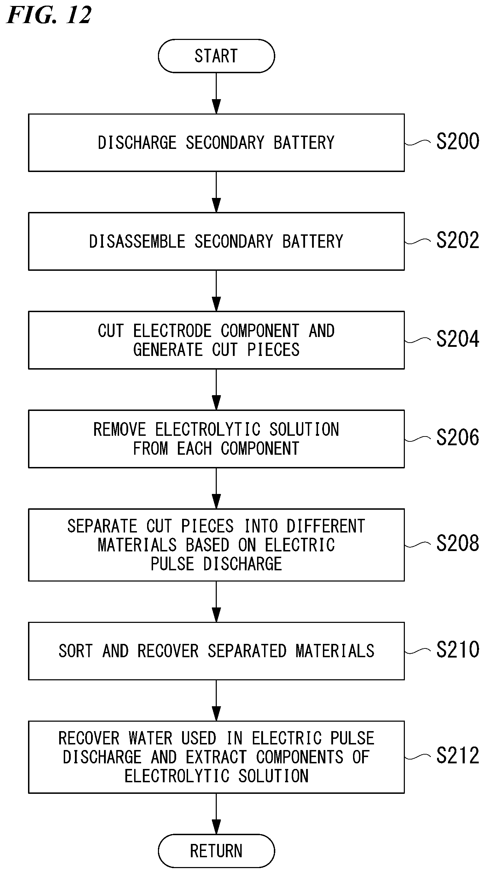

FIG. 12 shows steps of a storage battery recycling method including the above embodiment. The storage battery is discharged using the discharge device Q (FIG. 10, step S200). The storage battery is cut and disassembled into constituent components based on a method depending on the type (FIG. 10, step S202). During disassembly, the electrolytic solution is recovered from the storage battery (step S203, not shown). Among the constituent components, the electrode component is cut to generate cut pieces (FIG. 10, step S204). The cut pieces are cleaned to remove the electrolytic solution (FIG. 10, step S206). The cut pieces are loaded into the separation device 10, subjected to a decomposition process by electric pulse discharge in water, and separated into different materials (FIG. 10, step S208). Each separated material is sorted and recovered individually (FIG. 10, step S210). The water contained in the container in which the electric pulse discharge has been performed is recovered, and the components of the electrolytic solution dissolved in the water are extracted based on electrodialysis (FIG. 10, step S212).

Although several embodiments of the present invention have been described, these embodiments are presented as examples and are not intended to limit the scope of the invention. These embodiments can be implemented in various other forms, and various omissions, substitutions, and modifications can be made without departing from the spirit or scope of the present invention. These embodiments and modifications thereof are included within the scope and spirit of the present invention as well as within the scope of the present invention described in the claims and equivalents thereof. For example, in the storage battery recycling method, the step of discharging a storage battery may be omitted if possible. Further, a decomposition process by electric pulse discharge in the storage battery recycling method may be applied not only to lithium ion secondary batteries and nickel hydrogen secondary batteries, but also to other storage batteries. According to the present invention, in a nickel hydrogen secondary battery, the work efficiency can be improved by simultaneously disassembling the positive electrode component and the negative electrode component by electric pulse discharge. Furthermore, the storage battery recycling method may be applied to recycling of, not only storage batteries but also primary batteries.

### [Industrial Applicability]

The storage battery recycling device of the present invention can be effectively utilized for resource recovery from used storage batteries.

### [Reference Signs List]

1: Electric pulse discharge device; 2: Power supply device; 3: Output terminal; 4: Ground terminal; 8: Faraday cage; 10: Separation device; 11: Discharge unit; 12: Input terminal; 13: Working electrode; 14: Lid portion; 15: Support portion; 16: Washer; 21: Storage space; 20: Container; 21: Storage space; 22: Mounting member; 50: Cleaning device; 51: Drum; 52: Pedestal; 53: Container; 54: Drive unit; 60: Electrodialysis device; 61: Container; 62: Anode electrode; 62A: Inlet; 62B: Outlet; 63: Cathode electrode; 63A: Inlet; 63B: Outlet; 64: Semipermeable membrane; B: Cut piece; E: Electrical ground; F: Nickel hydrogen secondary battery; F1: Housing; F2: Battery cell; F3: Electrode component; F3: Predetermined dimension; H: Discharge circuit; M: Container; N: Disassembly device; N1: Mounting table; N2: Through hole; N4: Stopper; N10: Punching die unit; N11: Punch; N20: Stripper; N21: Through hole; N30: Water supply unit; Q: Discharge device; R: Processing object; S: Lithium ion secondary battery; S1: Housing; S3: Electrode component; S3M: Cut piece; S4: Support member; T: Control device; U: Discharge unit; W: Cleaning fluid.

## Claims

1. A storage battery recycling method comprising:
a step of disassembling into each constituent component based on a disassembly method in accordance with a type of storage battery;
a step of cutting an electrode component among said constituent components to generate cut pieces;
a step of arranging said cut pieces on a mounting member provided in a container containing water;
a step of separating different types of materials from said cut pieces by performing electric pulse discharge in water in said container; and
a step of sorting and recovering by type a plurality of materials separated from said cut pieces.

2. The storage battery recycling method according to Claim 1, further comprising a step of recovering an electrolytic solution in the step of disassembling said storage battery.

3. The storage battery recycling method according to Claim 1 or 2, further comprising a step of recovering said water contained in said container in which said electric pulse discharge has been performed and extracting a component of an electrolytic solution dissolved in said water based on electrodialysis.

4. The storage battery recycling method according to any one of Claims 1 to 3, further comprising a step of cleaning said cut pieces with a solvent, and
a step of extracting a component of said electrolytic solution contained in said solvent after cleaning.

5. The storage battery recycling method according to any one of Claims 1 to 4, wherein said electric pulse discharge is performed by discharging electric pulses generated based on a pulse voltage of 1 to 90 kV in said water a number of times in accordance with a solid-liquid ratio of said cut pieces and said water in said container.

6. The storage battery recycling method according to any one of Claims 1 to 5, further comprising, when said electrode component of said storage battery is wound,
a step of cutting said electrode component in a wound state; and
a step of unfolding said electrode component and individually recovering a positive electrode component, a negative electrode component, and a separator.

7. The storage battery recycling method according to any one of Claims 1 to 5, further comprising, when said electrode components of said storage battery are stacked,
a step of cutting said electrode components in a stacked state.

8. The storage battery recycling method according to any one of Claims 1 to 7, further comprising, using a press mold having one or more punching dies with dimensions corresponding to sizes of one or more battery cells arranged in said storage battery,
a step of simultaneously press-cutting positions of one or more of said battery cells and retrieving one or more of said electrode components having said dimensions.

9. The storage battery recycling method according to Claim 8, further comprising, in the step of press-cutting said storage battery using said press mold,
a step of recovering said electrolytic solution squeezed out from said storage battery when press-cutting said storage battery, and
a step of extracting a component contained in said electrolytic solution after cutting.

10. The storage battery recycling method according to any one of Claims 1 to 9, wherein said storage battery is a lithium ion secondary battery,
said electrode component is a positive electrode component constituted of a plurality of materials, and
said positive electrode component is constituted of a thin film-like positive electrode aluminum material and a layer of a positive electrode active material provided on a surface of said positive electrode aluminum material,
the method further comprising a step of separating said positive electrode aluminum material and said positive electrode active material based on said electric pulse discharge with respect to said cut pieces, sinking said positive electrode active material downward from said sieve-like mounting member and leaving said positive electrode aluminum material on an upper surface of said mounting member.

11. The storage battery recycling method according to any one of Claims 1 to 9, further comprising a step of simultaneously performing said electric pulse discharge with respect to said cut pieces of the positive electrode component and the negative electrode component among said electrode components,
wherein said storage battery is a nickel hydrogen secondary battery.

12. The storage battery recycling method according to Claim 11, wherein a nickel material constituting said positive electrode component, an iron material constituting the negative electrode component, and a separator provided between said positive electrode component and said negative electrode component are separated from said cut pieces based on said electric pulse discharge.

13. The storage battery recycling method according to any one of Claims 1 to 12, further comprising a step of stacking and arranging said cut pieces in a plurality of layers on an upper surface of said mounting member so as to form an electrical path during discharge of said electric pulse discharge.
